# EUROPEAN PATENT SPECIFICATION

(11) **EP 2 711 275 B1**
(45) Date of publication and mention of the grant of the patent: **08.04.2015**
(21) Application number: 13183714.8
(22) Date of filing: 10.09.2013
(51) Int. Cl.: B62J 37/00, B62K 11/04, F02M 25/08

(54) **Straddle-type vehicle**
Grätschsitz-Fahrzeug
Véhicule de type à selle

(30) Priority: 24.09.2012 JP 2012209625
(43) Date of publication of application: 26.03.2014
(73) Proprietor: Yamaha Hatsudoki Kabushiki Kaisha, Iwata-shi, Shizuoka 438-8501 (JP)
(72) Inventor: Inoue, Kazuhisa, Shizuoka, 438-8501 (JP)
(74) Representative: Zimmermann, Tankred Klaus

(56) References cited:
- JP-A- 2010 076 662
- JP-U- S5 719 188
- JP-U- S53 109 528
- JP-U- S58 127 167

## Description

### Technical Field

The present invention relates to a straddle-type vehicle.

### Background Information

A method is disclosed in the prior art of arranging, on a center stand, a canister for pooling fuel evaporated inside a fuel tank (see JP 2010-52659 A). According to the method of JP 2010-52659 A, the canister can be protected from below by the center stand. JP S58 127167 U discloses a straddle-type vehicle according to the preamble of independent claim 1. JP S53 109528 U and JP 2010 076662 A describe examples of further straddle-type vehicles including a canister for pooling fuel evaporated inside a fuel tank or an engine which is arranged between frame elements of the vehicle.

### SUMMARY

An object of the present invention is to protect a canister from scattered objects in a straddle-type vehicle.

This object is achieved by a straddle-type vehicle according to claim 1. In the method of JP 2010-52659 A, since the canister is arranged above the center stand, the canister cannot be located far enough away from the road surface. As a result, it is difficult to protect the canister from stones and other scattered objects.

A straddle-type vehicle according to a first aspect of the present invention includes a head pipe, a front frame, a pair of upper rear frames, a pair of lower rear frames, and a canister. The head pipe is arranged in the center of the vehicle body in the vehicle width direction and extends in the vertical direction. The front frame is connected to the head pipe and extends backward and downward from the head pipe. The pair of upper rear frames is connected to the front frame and extends backward from the front frame. The pair of lower rear frames is connected to the front frame below the pair of upper rear frames and extends backward from the front frame to be connected to the pair of upper rear frames. The canister is arranged between the pair of lower rear frames in the vehicle width direction and overlaps the pair of lower rear frames in a side view of the vehicle body. The straddle-type vehicle further includes a rear arm that is connected to the pair of lower rear frames and that extends backward from the front frame. The canister is arranged above the rear arm. The straddle-type further includes a rear suspension coupled to the front frame and the rear arm. The canister is arranged behind the rear suspension.

The straddle-type vehicle according to a second aspect of the present invention further includes, with respect to the first aspect, an air cleaner arranged above the pair of lower rear frames. The canister is attached to the air cleaner.

In the straddle-type vehicle according to a third aspect of the present invention, with respect to the second aspect, the air cleaner includes a main body part and a fixing part that is integrally formed with the main part and that extends downward from a bottom surface of the main part. The canister is fixed to the fixing part.

The straddle-type vehicle according to a fourth aspect of the present invention further includes, with respect to the third aspect, a guard plate that is fixed to the fixing part and that covers at least a portion of the canister from behind.

In the straddle-type vehicle according to a fifth aspect of the present invention, with respect to the first aspect, the rear arm includes a pair of arms that support a rear wheel, and a cross member connected to the pair of rear arms in front of the rear wheel. The canister is arranged above the cross member.

In the straddle-type vehicle according to an sixth aspect of the present invention, with respect to the first aspect, the rear suspension is arranged parallel to the front frame.

The straddle-type vehicle according to a seventh aspect of the present invention further includes, with respect to the first aspect, a link member that couples the rear suspension and the rear arm.

The straddle-type vehicle according to an eighth aspect of the present invention is related to the seventh aspect wherein, the canister is arranged above the link member.

### ADVANTAGEOUS EFFECTS

In the straddle-type vehicle according to the first aspect of the present invention, the canister is arranged between the pair of lower rear frames and overlaps the pair of lower rear frames in a side view of the vehicle body. Therefore, the canister can be arranged in a higher location than, for example, a case in which the canister is arranged on the center stand. As a result, the canister can be protected from stones and other scattered objects. Further, damage to the canister can be suppressed if, for example, the vehicle falls over since the canister is arranged between the pair of lower rear frames. The canister is arranged above the rear arm. Therefore, the canister can be protected from scattered objects since the canister is arranged in a suitably high location. Therefore, the canister can be protected by the rear arm from below. The canister is arranged behind the rear suspension. Therefore, the canister can be protected from the front by the rear suspension.

The canister of the straddle-type vehicle according to the second aspect of the present invention is attached below the air cleaner. Therefore, the canister can be protected from above by the air cleaner.

The canister of the straddle-type vehicle according to the third aspect of the present invention is fixed to the fixing part formed integrally with the main body part of the air cleaner. Therefore, the canister can be fixed in place more easily than a case in which the canister is fixed to the rear frame or the like by stays and brackets.

The guard plate of the straddle-type vehicle according to the fourth aspect of the present invention is fixed to the fixing part of the air cleaner and covers the back of the canister. Therefore, the canister can be protected from behind by the guard plate. Further, the guard plate can be fixed in place more easily than a case in which the guard plate is fixed to the rear frame or the like with stays and brackets.

The canister in the straddle-type vehicle according to the fifth aspect of the present invention is arranged above the cross member of the rear arm. Therefore, the canister can be protected from below more reliably by the cross member.

The rear suspension of the straddle-type vehicle according to the sixth aspect of the present invention is arranged parallel to the front frame. Therefore, a space for arranging the canister behind the rear suspension can be secured more easily in comparison to a case in which the rear suspension is tilted backward with respect to the front frame.

The link member of the straddle-type vehicle according to the seventh aspect of the present invention couples the rear suspension and the rear arm. Therefore, functionality of the rear suspension itself can be improved.

The canister in the straddle-type vehicle according to the eighth aspect of the present invention is arranged above the link member. Therefore, the canister can be further protected from below by the link member.

### BRIEF DESCRIPTION OF DRAWINGS

FIG. 1 is a side view of a straddle-type vehicle.
FIG. 2 is a perspective view of a vehicle body frame.
FIG. 3 describes intercoupling between a canister, a fuel tank, and a throttle body.
FIG. 4 describes a fixing location of the canister.
FIG. 5 describes an arrangement location of the canister.

### DETAILED DESCRIPTION OF EMBODIMENTS

### (Outline configuration of straddle-type vehicle 1)

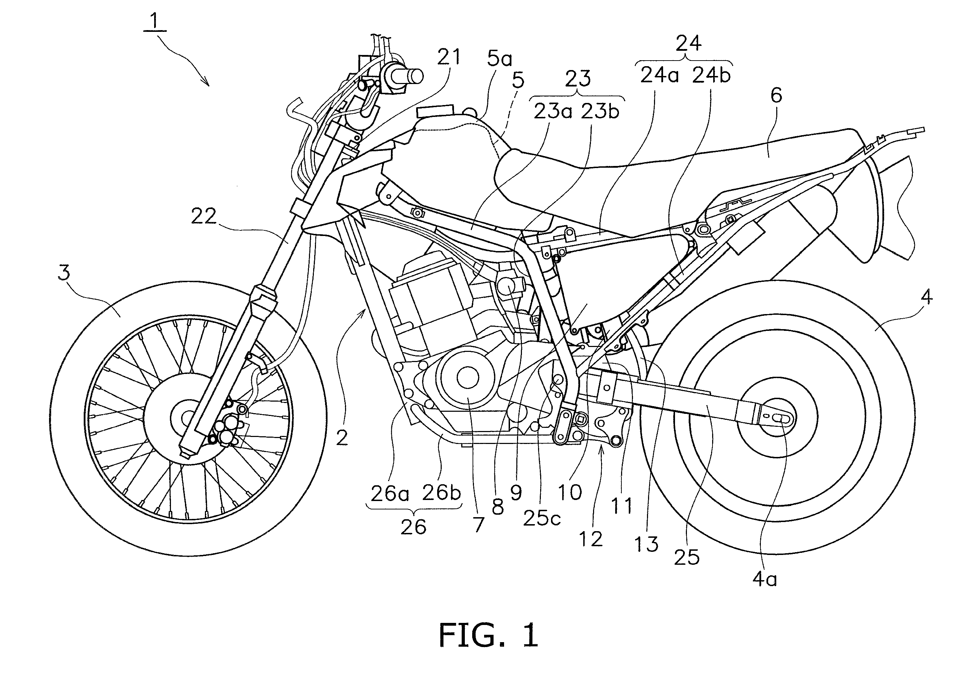

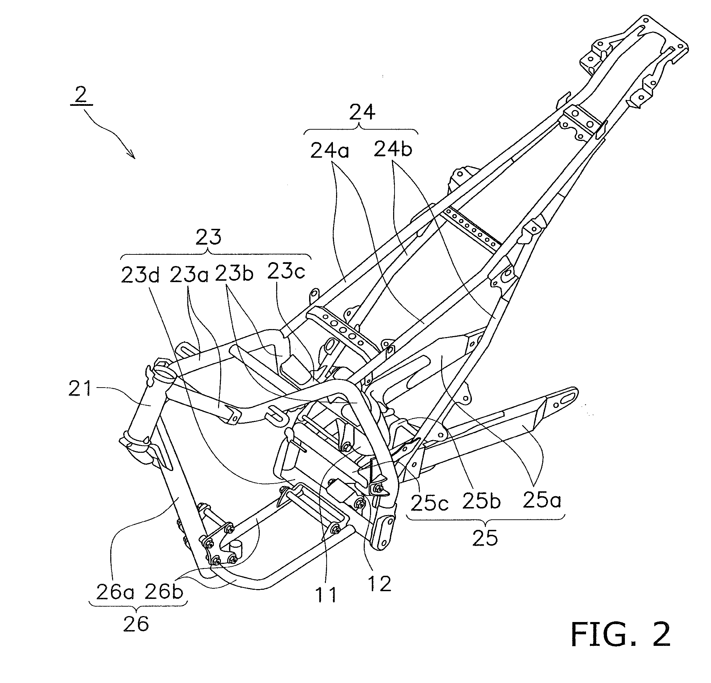

A straddle-type vehicle 1 according to an embodiment will be explained in detail with reference to the drawings. FIG. 1 is a side view of the straddle-type vehicle 1 according to an embodiment. FIG. 2 is a perspective view of a vehicle frame 2 according to the embodiment.

The straddle-type vehicle 1 is a motorcycle. The straddle-type vehicle 1 includes the vehicle frame 2, a front wheel 3, a rear wheel 4, a fuel tank 5, a seat 6, an engine 7, a throttle body 8, an air cleaner 9, a canister 10, a rear suspension 11, a link member 12, and a guard plate 13 as illustrated in FIG. 1. In the following explanation, the front-back direction is the front-back direction of the vehicle body as seen from a rider sitting on the seat 6. The vehicle width direction is the left-right direction of the vehicle body as seen from the rider sitting on the seat 6.

The vehicle frame 2 includes a head pipe 21, front forks 22, a front frame 23, a rear frame 24, a rear arm 25, and a down frame 26.

The head pipe 21 is arranged in the center of the vehicle body in the vehicle width direction. The head pipe 21 extends in the vertical direction. The front forks 22 are supported in a rotatable manner by the head pipe 21.

The front frame 23 is connected to the head pipe 21. The front frame 23 extends backward and downward from the head pipe 21. Specifically, the front frame 23 includes a pair of first front frames 23a, a pair of second front frames 23b, an upper cross member 23c, and a lower cross member 23d as illustrated in FIG. 2. The pair of first front frames 23a extends backward from the head pipe 21. The pair of second front frames 23b extends obliquely downward and backward from the back ends of the pair of first front frames 23a. The upper cross member 23c is connected to the pair of second front frames 23b below the back ends of the pair of first front frames 23a. The lower cross member 23d is connected to the pair of second front frames 23b below the upper cross member 23c.

The rear frame 24 is connected to the front frame 23. The rear frame 24 is arranged behind the front frame 23. Specifically, the rear frame 24 includes a pair of upper rear frames 24a, and a pair of lower rear frames 24b as illustrated in FIG. 2. The pair of upper rear frames 24a is connected to the back ends of the pair of first front frames 23a of the front frame 23. The pair of upper rear frames 24a extends backward from the pair of first front frames 23a. The pair of lower rear frames 24b is connected to the pair of second front frames 23b below the pair of upper rear frames 24a. The pair of lower rear frames 24b extends backward and upward from the pair of second front frames 23b. The back ends of the pair of lower rear frames 24b are connected to the pair of upper rear frames 24a.

The rear arm 25 is coupled to the front frame 23 below the pair of lower rear frames 24b. The rear arm 25 extends backward from the front frame 23. Specifically, the rear arm 25 includes a pair of arms 25a, a cross member 25b and a swing shaft 25c as illustrated in FIG. 2. The pair of arms 25a is supported in a swingable manner by the pair of second front frames 23b via the swing shaft 25c. The cross member 25b is connected to the pair of arms 25a in front of the rear wheel 4. The cross member 25b is arranged along the vehicle width direction. Both ends of the cross member 25b are connected to the pair of arms 25a.

The down frame 26 is connected to the head pipe 21 below the front frame 23. The down frame 26 extends backward and downward from the head pipe 21. Specifically, the down frame 26 includes a pair of first down frames 26a and a pair of second down frames 26b as illustrated in FIG. 2. The pair of first down frames 26a extends obliquely downward and backward from the head pipe 21. The pair of second down frames 26b extends backward from the lower ends of the pair of first down frames 26a. The back ends of the pair second down frames 26b are connected to the lower cross member 23d. A center stand can be attached to the pair of second down frames 26b.

The front wheel 3 is supported in a rotatable manner at the lower end of the front forks 22. The rear wheel 4 is supported in a rotatable manner at the back end of the pair of arms 25a. The rear wheel 4 rotates around a rotating shaft 4a.

The fuel tank 5 is arranged above the pair of first front frames 23 a. The fuel tank 5 stores fuel. The fuel tank 5 is covered by a tank cover 5a.

The seat 6 is arranged behind the fuel tank 5. The seat 6 is supported by the pair of upper rear frames 24a.

The engine 7 is arranged between the front frame 23 and the down frame 26. The throttle body 8 is arranged behind the engine 7. The throttle body 8 is able to supply air fed from the air cleaner 9 to the engine 7 in response to the opening or closing of a throttle valve. A carburetor, not shown, is coupled to the throttle body 8.

The air cleaner 9 is arranged below the pair of upper rear frames 24a. The air cleaner 9 is arranged above the pair of lower rear frames 24b. The air cleaner 9 is supported by the pair of lower rear frames 24b. The air cleaner 9 feeds purified air to the throttle body 8.

The canister 10 is arranged between the pair of lower rear frames 24b in the vehicle width direction. The canister 10 is arranged below the throttle body 8. The canister 10 is arranged above the rotating shaft 4a of the rear wheel 4. The canister 10 is arranged in front of the rotating shaft 4a of the rear wheel 4. The canister 10 is arranged below the air cleaner 9. The canister 10 is attached to the air cleaner 9. The canister 10 overlaps the pair of lower rear frames 24b as seen in a side view of the vehicle body as illustrated in FIG. 1. In the present embodiment, the canister 10 is formed in, but is not limited to, a rectangular box-like shape. The location of the canister 10 is described below.

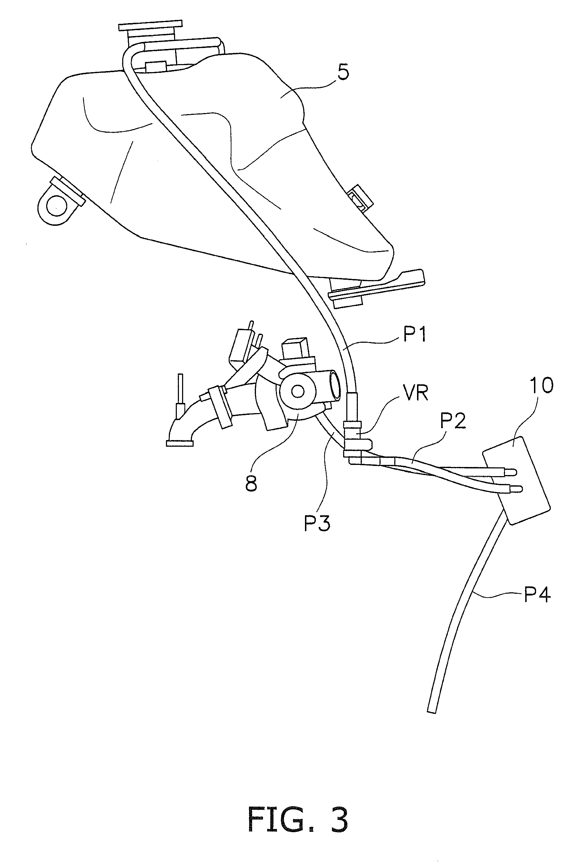

FIG. 3 describes the intercoupling between the canister 10, the fuel tank 5, and the throttle body 8.

The canister 10 is coupled to the fuel tank 5 via a first coupling pipe P1 and a second coupling pipe P2 as illustrated in FIG. 3. The upper end of the first coupling pipe P1 is inserted inside the fuel tank 5 from the upper surface thereof. The lower end of the first coupling pipe P1 is coupled to a rollover valve VR. The second coupling pipe P2 is coupled to the rollover valve VR and the canister 10. The rollover valve VR is a valve for preventing the leakage of fuel from the fuel tank 5 if the straddle-type vehicle 1 falls over. Evaporative fuel generated inside the fuel tank 5 passes through the first coupling pipe P1, the rollover valve VR, and the second coupling pipe P2 in order to be introduced into the canister 10. The evaporative fuel introduced into the canister 10 is filtered inside the canister 10. The canister is coupled to the throttle body 8 via a third coupling pipe P3. The fuel filtered by the canister 10 is sucked into the throttle body 8 through the third coupling pipe P3 due to negative pressure inside the throttle body 8. A drain pipe P4 used for excess fuel exhaust and air intake is coupled to the canister 10.

The rear suspension 11 is coupled to the front frame 23 and the rear arm 25. The rear suspension 11 is arranged parallel to the front frame 23. Specifically, the rear suspension 11 is arranged along the pair of second front frames 23b as illustrated in FIG. 1.

The link member 12 couples the rear suspension 11 and the rear arm 25. Specifically, the link member 12 is coupled to the cross member 25b.

The guard plate 13 is attached to the air cleaner 9. The guard plate 13 is arranged in front of the rear wheel 4. The guard plate 13 covers the lower portion of the canister 10 and the back of the rear suspension 11.

### (Location of Canister 10)

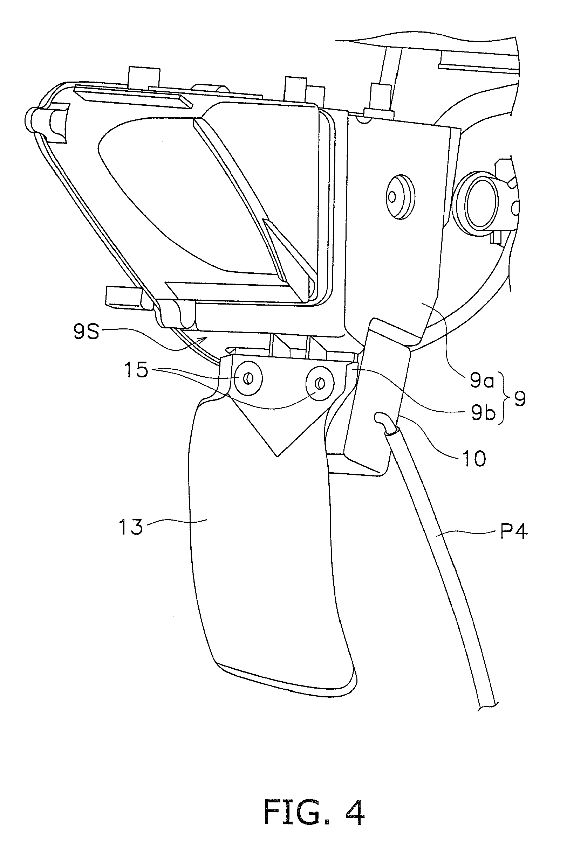

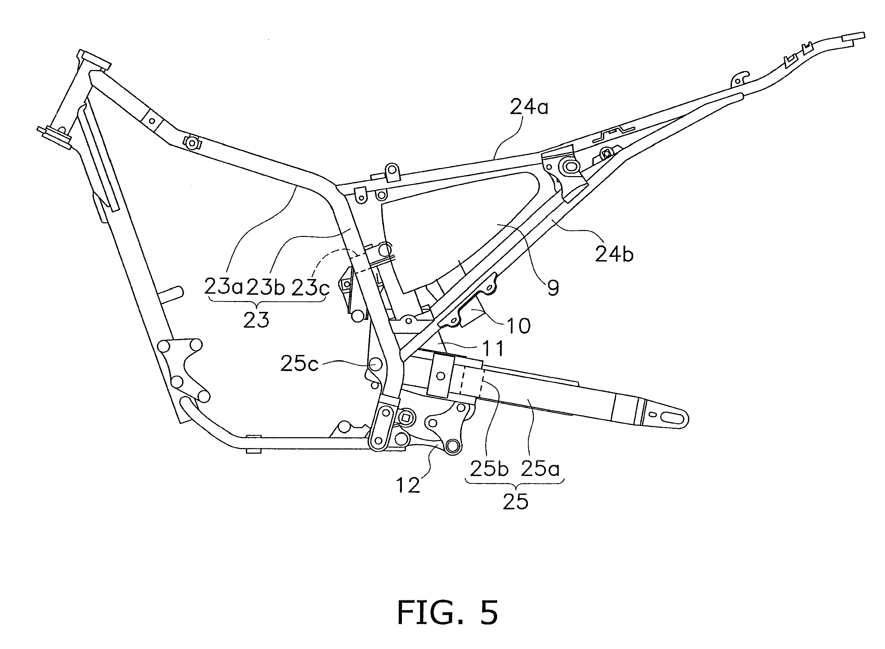

The location of the canister 10 is described below with reference to the drawings. FIG. 4 describes a fixing location of the canister. FIG. 5 describes an arrangement location of the canister 10. FIGS. 4 and 5 only show the members necessary for describing the location of the canister 10.

As illustrated in FIG. 4, the air cleaner 9 has a main body part 9a and a fixing part 9b. The main body part 9a accommodates an air filtering device. The fixing part 9b is arranged below the main body part 9a. The fixing part 9b is formed integrally with the main body part 9a. The fixing part 9b extends downward from a bottom surface 9S of the main body part 9a. In the present embodiment, the fixing part 9b is formed as but not limited to a plate.

As illustrated in FIG. 4, the canister 10 is arranged in front of the fixing part 9b and a guard plate 13 is arranged behind the fixing part 9b. The canister 10 and the guard plate 13 are each fixed to the fixing part 9b. In the present embodiment, the canister 10 and the guard plate 13 are both fixed together on the fixing part 9b by two fixing members 15. The guard plate 13 extends downward from the fixing part 9b to cover the back of the canister 10.

As illustrated in FIG. 5, the canister 10 is arranged between the pair of lower rear frames 24b and overlaps the pair of lower rear frames 24b as seen in a side view of the vehicle body. A portion of the canister 10 is arranged inside a triangular region surrounded by the pair of second front frames 23b, the pair of upper rear frames 24a, and the pair of lower rear frames 24b as seen from the side.

The canister 10 is arranged above the rear arm 25. In particular, the canister 10 is arranged above the cross member 25b of the rear arm 25. The canister 10 is arranged above the link member 12 that couples the rear suspension 11 and the rear arm 25. Therefore, although not shown, the canister 10 overlaps the cross member 25b and the link member 12 as seen from underneath of the straddle-type vehicle 1.

The canister 10 is arranged behind the rear suspension 11. In the present embodiment, the canister 10 is arranged parallel to the rear suspension 11. The lower end of the canister 10 is positioned above the lower end of the rear suspension 11. A portion of the canister 10 is arranged between the rear suspension 11 and the rear wheel 4.

The canister 10 is arranged above the swing shaft 25c of the rear arm 25. The canister 10 is arranged behind the swing shaft 25c of the rear arm 25.

### (Operation and effects)

(1) The canister 10 according to the present embodiment is arranged between the pair of lower rear frames 24b and overlaps the pair of lower rear frames 24b as seen in a side view of the vehicle body.
   Therefore, the canister can be arranged in a higher location than, for example, a case in which the canister is arranged on the center stand. As a result, the canister can be protected from stones and other scattered objects. Further, damage to the canister 10 can be suppressed if, for example, the vehicle falls over since the canister 10 is arranged between the pair of lower rear frames 24b.
(2) The canister 10 is attached below the air cleaner 9.
   Therefore, the top of the canister can be protected by the air cleaner 9.
(3) The canister 10 is fixed to the fixing part 9b formed integrally with the main body part 9a of the air cleaner 9.
   Therefore, the canister 10 can be fixed in place more easily than a case in which the canister 10 is fixed to the rear frame 24 or the like by stays and brackets.
(4) The guard plate 13 is fixed to the fixing part 9b of the air cleaner 9. The guard plate 13 covers the back of the canister 10.
   Therefore, the back of the canister 10 can be protected by the guard plate 13. Further, the guard plate 13 can be fixed in place more easily than a case in which the guard plate 13 is fixed to the rear frame 24 or the like with stays and brackets.
(5) The canister 10 is arranged above the rear arm 25.
   Therefore, the canister 10 can be protected from scattered objects since the canister 10 is arranged in a suitably high location. Moreover, the bottom of the canister 10 can be protected by the rear arm 25.
(6) The canister 10 is arranged above the cross member 25b of the rear arm 25.
   Therefore, the bottom of the canister 10 can be protected more reliably by the cross member 25b.
(7) The canister 10 is arranged behind the rear suspension 11.
   Therefore, the front of the canister 10 can be protected by the rear suspension 11.
(8) The rear suspension 11 is arranged parallel to the front frame 23.
   Therefore, a space can be easily secured for arranging the canister 10 behind the rear suspension 11 in comparison to a case in which the rear suspension 11 is tilted backward with respect to the front frame 23.
(9) The link member 12 couples the rear suspension 11 and the rear arm 25. Therefore, functionality of the rear suspension 11 can be improved.
(10) The canister 10 is arranged above the link member 12.
   Therefore, the bottom of the canister 10 can be further protected by the link member 12.
(11) The straddle-type vehicle 1 includes the rear suspension 11 coupled to the front frame 23, and the link member 12 that couples the rear suspension 11 and the cross member 25b of the rear arm 25.

Therefore, the canister 10 can be protected more reliably since the vicinity of at least a portion of the canister 10 can be surrounded by the rear suspension 11, the link member 12, and the cross member 25b.

### (Other embodiments)

While the present invention has been described with the embodiment provided above, the description and drawings form a portion of the disclosure and are not to be understood as limiting the invention. Various substitutions, embodiments, and operation techniques will be apparent to those skilled in the art.
(A) While the front frame 23 includes the pair of first front frames 23a and the pair of second front frames 23b in the above embodiment, the present invention is not limited as such. The front frame 23 may have one first front frame 23 a instead of the pair of first front frames 23a, and may have one second front frame 23b instead of the pair of second front frames 23b.
(B) While the canister 10 is fixed to the fixing part 9b of the air cleaner 9 in the above embodiment, the present invention is not limited as such. The canister 10 may be fixed to the front frame 23 or the rear frame 24.
(C) While the guard plate 13 covers the back of the bottom portion of the canister 10 in the above embodiment, the present invention is not limited as such. The guard plate 13 may cover the entire back of the canister 10.
(D) While the canister 10 and the guard plate 13 are fixed together on the canister 10 in the above embodiment, the present invention is not limited as such. The canister 10 and the guard plate 13 may be fixed separately on the canister 10.
(E) While the rear suspension 11 is arranged parallel to the front frame 23 in the above embodiment, the present invention is not limited as such. The rear suspension 11 may be inclined slightly with respect to the front frame 23, but the angle of inclination of the rear suspension 11 with respect to the front frame 23 is preferably small. Specifically, the angle of inclination of the rear suspension 11 with respect to the front frame 23 is preferably not more than 30 degrees and more preferably within 10 degrees.
(F) While a motorcycle has been described as an example of the straddle-type vehicle in the above embodiment, the straddle-type vehicle is not limited as such. In addition to the motorcycle, an all-terrain vehicle or a snowmobile may be included in the straddle-type vehicle. The motorcycle may also include an off-road type, an on-road type, a moped-type, as well as a scooter-type.
(G) While the front frame 23 is formed in a shape that protrudes upward as a whole as seen from the side in the above embodiment, the present invention is not limited as such. The front frame 23 may be formed in a shape that protrudes downward as a whole as seen from the side, or may be formed in a rectilinear shape as a whole.
(H) While the vehicle frame 2 has a down frame 26 in the above embodiment, the down frame 26 may not be included.

### Field of use

According to the present invention, a straddle-type vehicle can be provided that is able to protect a canister from scattered objects.

### REFERENCE SIGNS LIST

1: Straddle-type vehicle
2: Vehicle body frame
3: Front wheel
4: Rear wheel
5: Fuel tank
6: Seat
7: Engine
8: Throttle body
9: Air cleaner
10: Canister
11: Rear suspension
12: Link member
13: Guard plate
21: Head pipe
22: Front forks
23: Front frame
23a: First front frame
23b: Second front frame
24: Rear frame
24a: Upper rear frame
24b: Lower rear frame
25: Rear arm
25a: Arm
25b: Cross member
26: Down frame

## Claims

1. A straddle-type vehicle comprising:
a head pipe (21) arranged in a center of a vehicle body in a vehicle width direction and extending in the vertical direction;
a front frame (23, 23a, 23b) connected to the head pipe (21) and extending backward and downward from the head pipe (21);
a pair of upper rear frames (24a) connected to the front frame (23, 23a, 23b) and extending backward from the front frame (23, 23a, 23b);
a pair of lower rear frames (24b) connected to the front frame (23, 23a, 23b) below the pair of upper rear frames (24a) and extending backward and upward from the front frame (23, 23a, 23b) to be connected to the pair of upper rear frames (24a);
a canister (10) arranged between the pair of lower rear frames (24b) in the vehicle width direction and overlapping the pair of lower rear frames (24b) in a side view of the vehicle body
a rear arm (25) connected to the pair of lower rear frames (24b) and extending backward from the front frame (23, 23a, 23b), wherein the canister (10) is arranged above the rear arm (25); and
a rear suspension (11) coupled to the front frame (23, 23a, 23b) and the rear arm (25);
**characterized in that**
the canister (10) is arranged behind the rear suspension (11).

2. The straddle-type vehicle according to claim 1, further comprising:
an air cleaner (9) arranged above the pair of lower rear frames (24b); wherein
the canister (10) is attached to the air cleaner (9).

3. The straddle-type vehicle according to claim 2, wherein:
the air cleaner (9) includes a main body part (9a) and a fixing part (9b) integrally formed with the main body part (9a), the fixing part (9b) extending downward from a bottom surface of the main body part (9a); wherein
the canister (10) is fixed to the fixing part (9b).

4. The straddle-type vehicle according to claim 3, further comprising:
a guard plate (13) fixed to the fixing part (9b) and covering at least a portion of the canister (10) from behind.

5. The straddle-type vehicle according to any of claims 1 to 4, wherein
the rear arm (25) includes a pair of arms (25a) supporting a rear wheel (4), and a cross member (25b) connected to the pair of arms (25a) in front of the rear wheel (4), and
the canister (10) is arranged above the cross member (25b).

6. The straddle-type vehicle according to any of claims 1 to 5, wherein
the rear suspension (11) is arranged parallel to the front frame (23, 23a, 23b).

7. The straddle-type vehicle according to any of claims 1 to 6, further comprising:
a link member (12) coupling the rear suspension (11) and the rear arm (25).

8. The straddle-type vehicle according to claim 7, wherein
the canister (10) is arranged above the link member (12).

9. The straddle-type vehicle according to claim 1, wherein the rear arm (25) is coupled to the front frame (23, 23a, 23b) below the pair of lower rear frames (24b) and the straddle-type vehicle further comprising:
a link member (12) coupling the rear suspension (11) and the rear arm (25); wherein
the rear arm (25) includes a pair of arms (25a) supporting a rear wheel (4), and a cross member (25b) coupled to the pair of arms (25a) in front of the rear wheel (4); and
the link member (12) is coupled to the cross member (25b).

## Patentansprüche

1. Ein Grätsch-Typ-Fahrzeug, das folgende Merkmale aufweist:
ein Kopfrohr (21), das in einer Fahrzeugbreitenrichtung in einer Mitte eines Fahrzeugkörpers angeordnet ist und sich in der Vertikalrichtung erstreckt;
einen Vorderrahmen (23, 23a, 23b), der mit dem Kopfrohr (21) verbunden ist und sich von dem Kopfrohr (21) nach hinten und nach unten erstreckt;
ein Paar oberer Rückrahmen (24a), die mit dem Vorderrahmen (23, 23a, 23b) verbunden sind und sich von dem Vorderrahmen (23, 23a, 23b) nach hinten erstrecken;
ein Paar unterer Rückrahmen (24b), die mit dem Vorderrahmen (23, 23a, 23b) unterhalb des Paars oberer Rückrahmen (24a) verbunden sind und sich von dem Vorderrahmen (23, 23a, 23b) nach hinten und nach oben erstrecken, um mit dem Paar oberer Rückrahmen (24a) verbunden zu sein;
einen Behälter (10), der in der Fahrzeugbreitenrichtung zwischen dem Paar unterer Rückrahmen (24b) angeordnet ist und in einer Seitenansicht des Fahrzeugkörpers das Paar unterer Rückrahmen (24b) überlappt;
einen Rückarm (25), der mit dem Paar unterer Rückrahmen (24b) verbunden ist und sich von dem Vorderrahmen (23, 23a, 23b) nach hinten erstreckt, wobei der Behälter (10) oberhalb des Rückarms (25) angeordnet ist; und
eine Rückaufhängung (11), die mit dem Vorderrahmen (23, 23a, 23b) und dem Rückarm (25) gekoppelt ist;
**dadurch gekennzeichnet, dass**:
der Behälter (10) hinter der Rückaufhängung (11) angeordnet ist.

2. Das Grätsch-Typ-Fahrzeug gemäß Anspruch 1, das ferner folgendes Merkmal aufweist:
einen Luftreiniger (9), der oberhalb des Paares unterer Rückrahmen (24b) angeordnet ist; wobei:
der Behälter (10) an dem Luftreiniger (9) angebracht ist.

3. Das Grätsch-Typ-Fahrzeug gemäß Anspruch 2, bei dem:
der Luftreiniger (9) einen Hauptkörperteil (9a) und einen Fixierungsteil (9b), der einstückig mit dem Hauptkörperteil (9a) gebildet ist, beinhaltet, wobei sich der Fixierungsteil (9b) von einer unteren Oberfläche des Hauptkörperteils (9a) nach unten erstreckt; wobei:
der Behälter (10) an dem Fixierungsteil (9b) fixiert ist.

4. Das Grätsch-Typ-Fahrzeug gemäß Anspruch 3, das ferner folgendes Merkmal aufweist:
eine Schutzplatte (13), die an dem Fixierungsteil (9b) fixiert ist und zumindest einen Abschnitt des Behälters (10) von hinten bedeckt.

5. Das Grätsch-Typ-Fahrzeug gemäß einem der Ansprüche 1 bis 4, bei dem:
der Rückarm (25) ein Paar von Armen (25a), die ein Hinterrad (4) tragen, und ein Querbauteil (25b) beinhaltet, das vor dem Hinterrad (4) mit dem Paar von Armen (25a) verbunden ist, und
der Behälter (10) oberhalb des Querbauteils (25b) angeordnet ist.

6. Das Grätsch-Typ-Fahrzeug gemäß einem der Ansprüche 1 bis 5, bei dem:
die Rückaufhängung (11) parallel zu dem Vorderrahmen (23, 23a, 23b) angeordnet ist.

7. Das Grätsch-Typ-Fahrzeug gemäß einem der Ansprüche 1 bis 6, das ferner folgendes Merkmal aufweist:
ein Verbindungsbauteil (12), das die Rückaufhängung (11) und den Rückarm (25) koppelt.

8. Das Grätsch-Typ-Fahrzeug gemäß Anspruch 7, bei dem:
der Behälter (10) oberhalb des Verbindungsbauteils (12) angeordnet ist.

9. Das Grätsch-Typ-Fahrzeug gemäß Anspruch 1, bei dem der Rückarm (25) unterhalb des Paars unterer Rückrahmen (24b) mit dem Vorderrahmen (23, 23a, 23b) gekoppelt ist, wobei das Grätsch-Typ-Fahrzeug ferner folgendes Merkmal aufweist:
ein Verbindungsbauteil (12), das die Rückaufhängung (11) und den Rückarm (25) koppelt; wobei:
der Rückarm (25) ein Paar von Armen (25a), die ein Hinterrad (4) tragen, und ein Querbauteil (25b) beinhaltet, das vor dem Hinterrad (4) mit dem Paar von Armen (25a) gekoppelt ist; und
das Verbindungsbauteil (12) mit dem Querbauteil (25b) gekoppelt ist.

## Revendications

1. Véhicule du type à selle, comprenant:
un tube de tête (21) disposé au centre d'une carrosserie de véhicule dans un sens de la largeur du véhicule et s'étendant dans la direction verticale;
un châssis avant (23, 23a, 23b) connecté au tube de tête (21) et s'étendant vers l'arrière et vers le bas depuis le tube de tête (21);
une paire de châssis arrière supérieurs (24a) connectés au châssis avant (23, 23a, 23b) et s'étendant vers l'arrière depuis le châssis avant (23, 23a, 23b);
une paire de châssis arrière inférieurs (24b) connectés au châssis avant (23, 23a, 23b) au-dessous de la paire de châssis arrière supérieurs (24a) et s'étendant vers l'arrière et vers le haut depuis le châssis avant (23, 23a, 23b) à connecter à la paire de châssis arrière supérieurs (24a);
un bidon (10) disposé entre la paire de châssis arrière inférieurs (24b) dans le sens de la largeur du véhicule et venant en recouvrement avec la paire de châssis arrière inférieurs (24b), en vue de côté de la carrosserie du véhicule
un bras arrière (25) connecté à la paire de châssis arrière inférieurs (24b) et s'étendant vers l'arrière depuis le châssis avant (23, 23a, 23b), où le bidon (10) est disposé au-dessus du bras arrière (25); et
une suspension arrière (11) couplée au châssis avant (23, 23a, 23b) et au bras arrière (25);
**caractérisé par le fait que**
le bidon (10) est disposé derrière la suspension arrière (11).

2. Véhicule du type à selle selon la revendication 1, comprenant par ailleurs:
un filtre à air (9) disposé au-dessus de la paire de châssis arrière inférieurs (24b); où le bidon (10) est fixé au filtre à air (9).

3. Véhicule du type à selle selon la revendication 2, dans lequel:
le filtre à air (9) comporte une partie de corps principal (9a) et une partie de fixation (9b) formée de manière solidaire avec la partie de corps principal (9a), la partie de fixation (9b) s'étendant vers le bas depuis la surface inférieure de la partie de corps principal (9a); où le bidon (10) est fixé à la partie de fixation (9b).

4. Véhicule du type à selle selon la revendication 3, comprenant par ailleurs:
une plaque de protection (13) fixée à la partie de fixation (9b) et recouvrant au moins une partie du bidon (10) depuis l'arrière.

5. Véhicule du type à selle selon l'une quelconque des revendications 1 à 4, dans lequel
le bras arrière (25) comprend une paire de bras (25a) supportant une roue arrière (4), et un élément transversal (25b) connecté à la paire de bras (25a) devant la roue arrière (4), et
le bidon (10) est disposé au-dessus de l'élément transversal (25b).

6. Véhicule du type à selle selon l'une quelconque des revendications 1 à 5, dans lequel
la suspension arrière (11) est disposée parallèlement au châssis avant (23, 23a, 23b).

7. Véhicule du type à selle selon l'une quelconque des revendications 1 à 6, comprenant par ailleurs:
un élément de connexion (12) couplant la suspension arrière (11) et le bras arrière (25).

8. Véhicule du type à selle selon la revendication 7, dans lequel le bidon (10) est disposé au-dessus de l'élément de connexion (12).

9. Véhicule du type à selle selon la revendication 1, dans lequel le bras arrière (25) est couplé au châssis avant (23, 23a, 23b) au-dessous de la paire de châssis arrière inférieurs (24b) et le véhicule du type à selle comprend par ailleurs:
un élément de connexion (12) couplant la suspension arrière (11) et le bras arrière (25); où
le bras arrière (25) comporte une paire de bras (25a) supportant une roue arrière (4), et un élément transversal (25b) couplé à la paire de bras (25a) devant la roue arrière (4); et
l'élément de connexion (12) est couplé à l'élément transversal (25b).
